# EUROPEAN PATENT APPLICATION

(11) **EP 2 433 852 A1**
(43) Date of publication of application: **28.03.2012**
(21) Application number: 09844926.7
(22) Date of filing: 22.05.2009
(51) Int. Cl.: B62D 25/20

(54) **VEHICLE BODY STRUCTURE**

(71) Applicant: Toyota Jidosha Kabushiki Kaisha, Toyota-shi, Aichi 471-8571 (JP)
(72) Inventor: TAKAHASHI, Yuuki, Toyota-shi Aichi 471-8571 (JP)
(74) Representative: Kuhnen & Wacker
(86) International application number: PCT/JP2009/059429
(87) International publication number: WO 2010/134194

(57) **Abstract**

A vehicle body structure in which load or stress can be sufficiently transferred also to a wall surface of a member that includes a rear side member and has a polygonal cross-section is provided. A fastening portion 33 of a member such as a towing hitch member 30 is attached below a first surface 11 of a member such as rear side members 10 and 20, for example, by interposing a rear floor pan side 80. A stiffening bracket 40 is attached from above a second surface 12 opposite to a first surface 11 of the rear side members 10 and 20, and these are fastened by a nut 64 and a bolt 60. In addition, the bracket 40 is fastened to lateral surfaces 15 and 16 of the rear side members 10 and 20 by bolts 62 and 63 and nuts 66 and 67.

## Description

### Technical Field

The present invention relates to a vehicle body structure, and more particularly, to the structure of a member that constitutes a vehicle undercarriage.

### Background Art

As a vehicle structure for connecting a towed vehicle to the back of a vehicle and towing the towed vehicle, a configuration in which a towing hitch member is installed in a rear portion of the vehicle is known (for example, refer to Patent Literature 1). A body structure described in Patent Literature 1 has a configuration as follows. That is, a rear side member constituting the framework of a vehicle body extends in the longitudinal direction along both sides of a rear portion of a vehicle body. On the other hand, a side member outer is installed as a member that constitutes an outer plate of a lateral surface side of the vehicle body, and a lower back panel is installed as a member that constitutes an outer plate of a rear surface side of the vehicle body. A towing hitch member is attached to a lower surface of the rear side member and a lateral surface that faces an inner side of the vehicle body in a lower end side of the side member outer by a fastening means such as a bolt or welding, and is fixed to the lower back panel. Therefore, since the load or stress at the time of towing the vehicle is distributed to not only the rear side member but also the side member outer or the lower back panel, it is possible to maintain the joint strength between a rear floor panel that is connected to the rear side member and the side member outer or the lower back panel.

### Citation List

### Patent Literature

[Patent Literature 1] Japanese Unexamined Patent Application Publication No. 2007-99031A

### Summary of Invention

### Technical Problem

In the related art, a member having a rectangular cross-section is used in the rear side member, and the rear side member is configured so that stress or load that is applied to the towing hitch member connected to the lower surface is transferred via lateral surfaces (longitudinal wall surfaces). In recent years, types of vehicles that adopt a polygonal cross-section such as a hexagonal cross-section to the rear side member have increased in view of collision performance or the like. However, when adopting the above-described configuration, in the configuration of the related art, it is difficult to sufficiently transfer load or stress to the longitudinal wall surfaces.

Therefore, it is an object of the invention to provide a vehicle body structure capable of sufficiently transferring load or stress also to a wall surface of a member including the rear side member.

### Solution to Problem

To solve the aforementioned problem, the vehicle body structure according to the invention including: a first member that constitutes a vehicle undercarriage or is connected to the vehicle undercarriage; a second member that is attached on a first surface of the first member; a bracket that is attached to a second surface side opposite to the first surface of the first member; and a shaft member that penetrates the first member, the second member, and the bracket, and is connected thereto, wherein the bracket extends also to a lateral surface side that is positioned between the fist surface of the first member and the second surface and is fixed to the first member in the lateral side portion.

For example, the first member may be a rear side member that is disposed on both side portions of a rear portion of a vehicle body, and the second member may be a towing hitch member that is attached to the lower surface of the rear side member. In this case, the bracket may be attached to an upper surface of the rear side member, extend also to a lateral surface side of the rear side member, and be fixed also to the lateral side portion.

A taper portion may be provided on the upper surface of the rear side member, and the bracket may be fixed to the lateral surface of the rear side member below the taper portion.

### Advantageous Effects of Invention

According to the invention, the first member is sandwiched by the second member that is attached to the first surface side and the bracket that is attached to the second surface side opposite to the first surface, and is fixed by the shaft member that penetrates therethrough. In addition, the bracket extends to the lateral surface side that is positioned between the first surface of the first member and the second surface and is fixed to the first member also in the lateral surface. As a result, since load or stress applied to the second member is transferred to the second surface of the first member via the shaft member and the bracket, and further, to the lateral surface, it is possible to sufficiently transfer the load or stress to each wall surface even when the first member has a polygonal cross-section.

The body structure is suitable for the rear side member, and the upper surface of a bar of a rear side member is a polygonal structure that has equal to or more than six sides, and the polygonal structure has a taper portion. In this case, since the bracket is connected to the lateral surface below the taper portion, it is possible to reliably transfer load or stress to the lateral surface.

### Brief Description of Drawings

Fig. 1 is an exploded perspective view showing a vehicle body structure according to the invention;
Fig. 2 is a cross-sectional view taken along a line II-II showing an attachment state of the body structure of Fig. 1;
Fig. 3 is an exploded perspective view showing a vehicle body structure of the related art; and
Fig. 4 is a cross-sectional view taken along a line IV-IV showing an attachment state of the body structure of Fig. 3.

### Description of Embodiments

Hereinafter, exemplary embodiments according to the invention will be described in detail with reference to the accompanying drawings. In order to facilitate understanding of the description, the same reference numbers are denoted with respect to the same component elements as much as possible in each drawing, and overlapping descriptions are omitted.

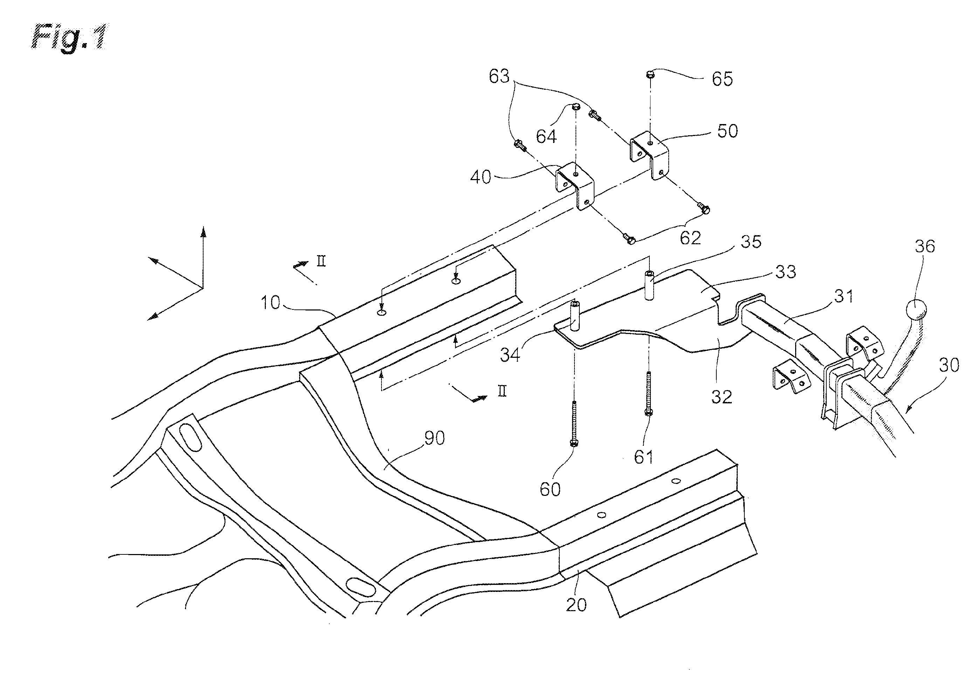

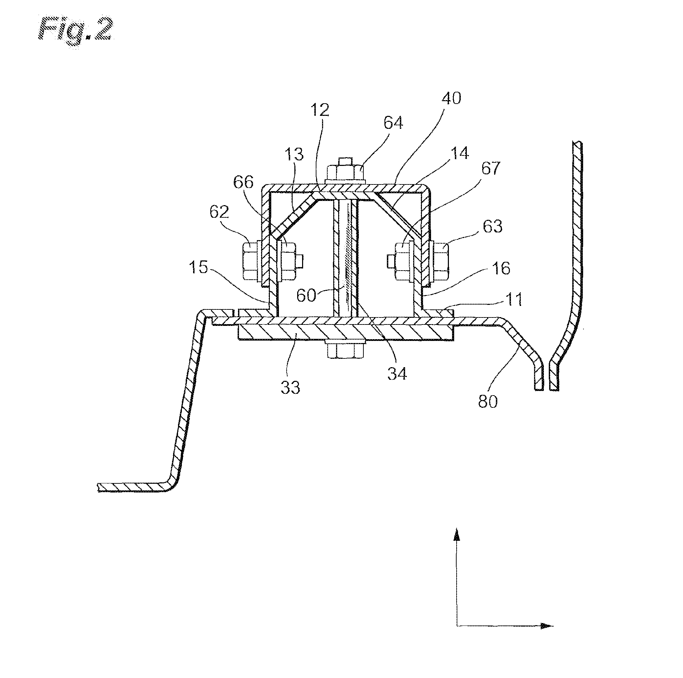

Fig. 1 is a perspective view showing a vehicle body structure according to the invention, and Fig. 2 is a cross-sectional view taken along a line II-II of Fig. 1. In the description below, a state where the body structure is adopted to a structure that is around a towing hitch member is exemplified. Rear side members 10 and 20 constituting a portion of a framework of a vehicle undercarriage are members that extend to the back of the vehicle along a side end of a rear portion of the vehicle, and a cross-sectional shape of the rear side member has an approximately hexagonal structure while being an approximate C shape in which the lower side (first surface) of the member is opened. A rear floor panel 90 that constitutes a floor surface of the rear portion of the vehicle body is attached to the rear side members 10 and 20.

A towing hitch member 30 includes a plate portion 32 that has a planar shape and is approximately parallel to a lateral surface of the vehicle in both ends of a frame 31 that has an approximately quadrilateral column and extends in the width direction of the vehicle. In addition, in the upper end portion of the plate portion 32, a fastening portion 33 that is approximately perpendicularly bent and that extends horizontally is formed. Cylindrical portions 34 and 35 are disposed on the fastening portion 33 in a longitudinal direction of the vehicle at a predetermine gap. Moreover, a hitch pin 36 for connecting a towed vehicle is attached to the vicinity of an approximately central portion of the frame 31.

The fastening portion 33 of the towing hitch member 30 is attached, by interposing a rear floor pan side 80 that constitutes a floor-side wall of the rear portion of the vehicle, from below a first surface 11 that is a lower surface of the rear side member 10, and by inserting the cylindrical portions 34 and 35. In addition, brackets 40 and 50 having U shaped cross-sections are attached so as to sandwich the rear side member 10 from the top of an upside surface (second surface) 12 of the rear side member 10. By fastening bolts 60 and 61 that penetrate the cylindrical portions 34 and 35 from the underside of the cylindrical portions with nuts 64 and 65 on the brackets 40 and 50, the towing hitch member 30 and the brackets 40 and 50 are connected and fixed to the rear side member 10.

Two surfaces that are continued to the second surface 12 of the rear side member 10 are taper surfaces 13 and 14 that are inclined, and surfaces that are continued to the taper surfaces become side wall surfaces 15 and 16 that approximately perpendicularly extend. In addition, the bracket 40 (50) comes into contact with not only the second surface 12 but also the side wall surfaces 15 and 16, and by fastening bolts 62 and 63 that penetrate the bracket 40 (50) and the side wall surfaces 15 or 16 with nuts 66 and 67, the bracket and the side walls are connected and fixed to each other.

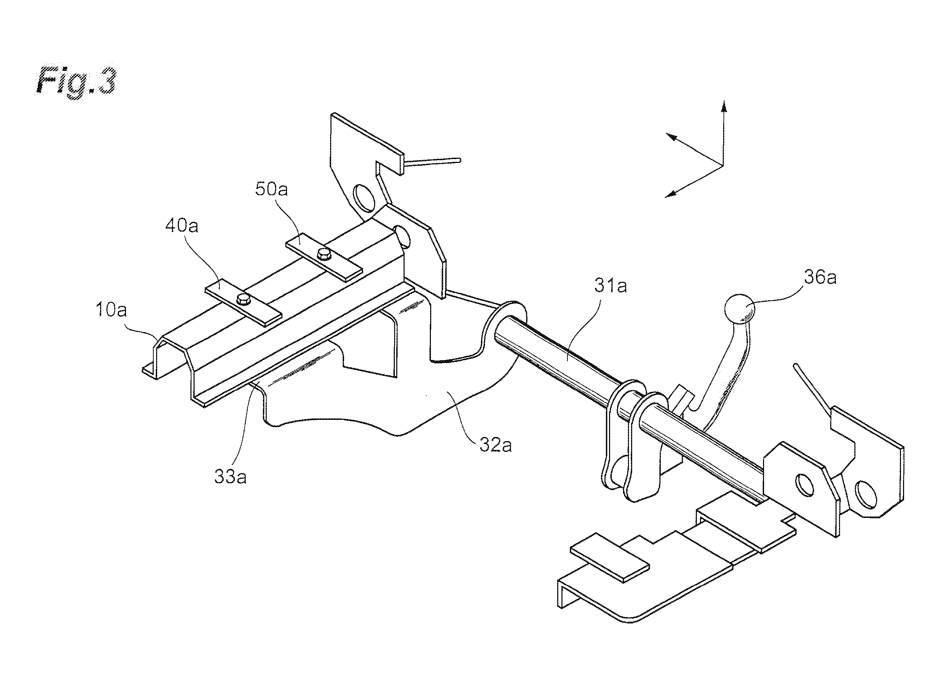

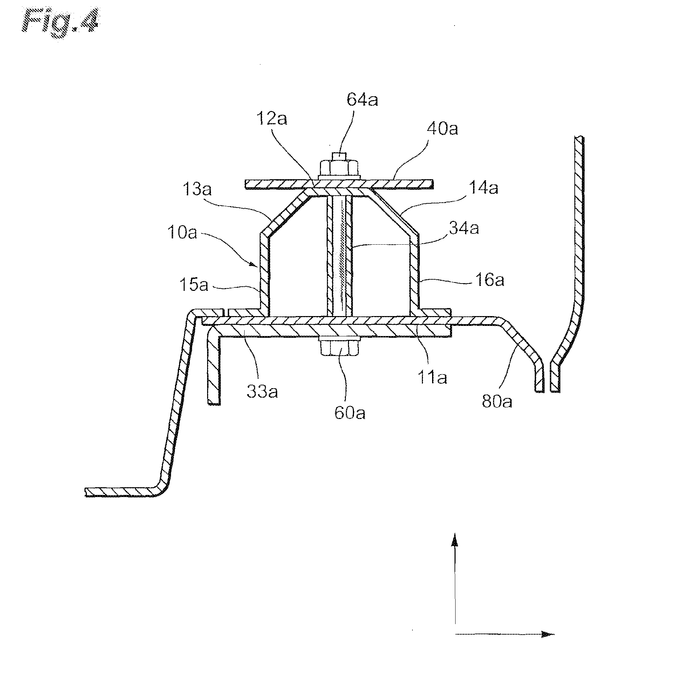

Figs. 3 and 4 are views showing a configuration of the related art for comparison. The configuration of the related art is different to the configuration of the invention in that brackets 40a and 50a are a flat plate shape, come into contact with only the second surface 12a of the upper side of the rear side member 10a, and are separated from the side wall surfaces 15 and 16 of the rear side member.

The load or stress that is caused in the frame 31(a) of the towing hitch member 30(a) when towing a towed vehicle that is connected to the hitch pin 36(a) acts as a pulling force that biases the fastening portion 33(a) to the center of the back of the vehicle via the plate portion 32(a). In the configuration of the related art, a portion of the force that is caused in the fastening portion 33a is transferred to the first surface 11 a of the rear side member 10a via the rear floor pan side 80a from the fastening portion 33a. However, the first surface 11a is an opened surface, and the contact surface of the rear floor pan side 80a is not large. Therefore, due to the fact that the contact surface, of the first surface and the rear floor pan side are not directly fixed to each other and slipping occurs between both, or the like, transfer efficiency is not high. Accordingly, most of the force that is caused in the fastening portion 33a is transferred to the brackets 40a and 50a through the cylindrical portions 34a and 35a, the bolts 60a and 61a, and the nuts 64a and 65a, and to the second surface 12a of the rear side member 10a. Thus, in the configuration of the related art, stress is concentrated in the second surface of the rear side member 10a, and deformation of the rear side member 10a is likely to occur.

On the other hand, the configuration of the invention is the same as that of the related art in that most of the force that is caused in the fastening portion 33 is transferred to the brackets 40 and 50 through the cylindrical portions 34 and 35, the bolts 60 and 61, and the nuts 64 and 65. However, in the configuration of the invention, since the bracket 40 (50) is connected to not only the second surface 12 of the rear side member 10 but also the side wall surfaces 15 and 16 by the bolts 62 and 63 and the nuts 66 and 67, the force transferred to the bracket 40 can be effectively transferred to the second surface 12 and the side wall surfaces 15 and 16. Therefore, the load or stress applied to the rear side member 10 can be distributed, and deformation of the rear side member can be suppressed. In this way, since the stress applied to each surface of the rear side member 10 can be distributed, the thickness of each surface becomes smaller as compared with a case where the stress is concentrated as in the configuration of the related art, the weight of the vehicle undercarriage is reduced, and the weight of the vehicle body itself can also be reduced. As a result, improvement of fuel efficiency is realized.

In the above-described embodiment, the brackets 40 and 50 do not come into contact with the taper surfaces 13 and 14. However, the brackets may be constituted so that the brackets come into contact with the taper surfaces and further be connected to them.

In the description as described above, an example in which the invention is used in the structure of the towing hitch member is described. However, the invention is not limited thereto if the vehicle structure has the same kind of configuration, and can be applied as the member that constitutes the vehicle undercarriage or the structure of a member that is connected to the undercarriage.

### Reference Signs List

10,10a: REAR SIDE EMBER, 11,11a: FIRST SURFACE (LOWER SURFACE), 12,12a: SECOND SURFACE (UPPER SURFACE), 13,14: TAPER SURFACE, 15,16: SIDE WALL SURFACE, 30: TOWING HITCH MEMBER, 31: FRAME, 32: PLATE PORTION, 33,33a: FASTENING PORTION, 34,34a,35,35a: CYLINDRICAL PORTION, 36,36a; HITCH PIN, 40,40a,50,50a: BRACKET, 60 to 63, 60a to 63a: BOLT, 64 to 67, 64a to 67a: NUT, 80,80a: REAR FLOOR PAN SIDE, 90: REAR FLOOR PANEL

## Claims

1. A vehicle body structure comprising:
a rear side member that is disposed on both side portions of a rear portion of the vehicle body;
a member that is attached to a lower surface of the rear side member;
a bracket that is attached to an upper surface of the rear side member; and
a shaft member that penetrates the attached member, the rear side member, and the bracket and is connected thereto,
wherein the bracket extends also to a lateral surface side of the rear side member and is fixed to the rear side member in the lateral side portion.

2. The vehicle body structure according to claim 1,
wherein a taper portion is provided on the upper surface of the rear side member, and the bracket is fixed to the lateral surface of the rear side member below the taper portion.

3. A vehicle body structure comprising:
a first member that constitutes a vehicle undercarriage or is connected to the vehicle undercarriage;
a second member that is attached on a first surface of the first member;
a bracket that is attached to a second surface side opposite to the first surface of the first member; and
a shaft member that penetrates the first member, the second member, and the bracket and is connected thereto,
wherein the bracket extends also to a lateral surface side that is positioned between the first surface of the first member and the second surface and is fixed to the first member in the lateral side portion.
